Europäisches Patentamt

European Patent Office

Office européen des brevets

⑩

(11) Publication number: **0 233 904**
**B1**

(12) **EUROPEAN PATENT SPECIFICATION**

(45) Date of publication of patent specification: **20.06.90**

(21) Application number: **86904831.4**

(22) Date of filing: **23.07.86**

(86) International application number:
**PCT/FI86/00085**

(87) International publication number:
**WO 87/00698 29.01.87 Gazette 87/03**

(51) Int. Cl.⁵: **H 01 R 39/30, B 23 K 9/00**

(54) **APPARATUS FOR UNDERWATER WORKING.**

(30) Priority: **24.07.85 FI 852876**

(43) Date of publication of application:
**02.09.87 Bulletin 87/36**

(45) Publication of the grant of the patent:
**20.06.90 Bulletin 90/25**

(84) Designated Contracting States:
**AT BE CH DE FR GB IT LI LU NL SE**

(56) References cited:
**DE-A-2 228 078**
**DE-A-2 854 027**
**FR-A-1 265 272**
**GB-A- 777 335**
**GB-A-1 353 562**
**GB-A-1 516 715**
**US-A-3 338 808**

(73) Proprietor: **NIINIVAARA OY**
**Unioninkatu 4 P.O. Box 253**
**SF-00131 Helsinki (FI)**

(72) Inventor: **NIINIVAARA, Juhani, Ensi, Kyösti**
**SF-45610 Koria**
**SF-45610 Koria (FI)**

(74) Representative: **Hallam, Arnold Vincent et al**
**E.N. LEWIS & TAYLOR 144 New Walk**
**Leicester LE1 7JA (GB)**

Courier Press, Leamington Spa, England.

# Description

The subject of this invention is an apparatus for underwater working, especially for heating, welding, torch cutting, cleaning and electrolytical coating of metal constructions with the aid of electric current. The apparatus consists of an electrically conductive rotatable shaft which is arranged on the frame element and conducts electric current to a removable tip element, which is attached to the end of the shaft and is rotating with the shaft, this tip can be heating bush, welding electrode, cutting, cleaning and/or coating disk.

It has been previously known to use in this type of apparatuses different electric terminals and carbon arrangements to conduct necessary electric current to shaft. The problem and great disadvantages of these solutions is, however, that apparatuses cannot be used in great depths due to insufficient compensation of hydraulic water pressure.

Attempts have been made to solve this problem through massive frame constructions and complicated sealing systems that would stand the high external pressure. Such apparatuses are, however, expensive and rather difficult to handle because they are heavy and big in size. As a result of non-existing or defective pressure compensation water breaks into the tool preventing its use or the casing of the frame part literally breaks down.

GB—A—777 335 discloses an apparatus for effecting an electrical connection between relatively rotatable contact members. The device comprises an electrically conductive rotatable shaft comprising outer and inner shaft elements coaxially arranged one within the other and electrically insulated from one another. Two chambers are formed, each containing mercury.

One chamber is connected to the positive pole of a power source and surrounds one of the shaft elements whilst the other chamber is connected to the negative pole of the power source and surrounds the other of the shaft elements.

An additional disadvantage of existing tools is that they need, without exception, an earth wire connected with the "−" pole of the power source in order to create flame arc. This aspect will essentially limit the applications of the apparatus and makes it nearly impossible to use it as a tool in driving robots or remote controlled equipment. As the work usually requires driver's help it is obvious that to use such equipment is slow and expensive involving safety hazards.

The purpose of the present invention is to eliminate the disadvantages and weak points found in existing apparatuses, and to produce an apparatus for underwater working which will be lighter, more reliable and easier to use.

Accordingly, the present invention provides an apparatus for under water working such as heating, welding, torch cutting, cleaning and electrolytic coating of metal constructions, comprising an electrically conductive rotatable shaft arranged on a frame element for conducting electric current to a removable tip element attached to the end of the shaft for rotation therewith, said shaft comprising an outer shaft element and an inner shaft element coaxial with said outer shaft and insulated electrically therefrom; two chambers formed in the frame element and containing liquid electrically conductive medium, one of which chambers is connectible to the "+" pole of a power source and surrounds one of the inner and outer shafts and the other of which chambers is connected to the "−" pole of the power source and surrounds the other of the inner and outer shafts, and each said chamber is closed by an electrically conductive cover means by way of which said electrically conductive medium is connectible to the power source; and wherein the tip element is electrically conductive and comprises two parts, connected respectively to said inner and outer shafts; characterised in that the apparatus further comprises a respective pressure balancing device in each said cover means, each said pressure balancing device comprises a spring-loaded piston movable in a cavity one end of which opens to space outside the frame element and the other end of which opens into the chamber.

One advantage of the invention is that earth current may be conducted through the rotatable shaft, which means that a flame arc can be created exactly where it is needed without separately connected earth wires. Thus the apparatus according to the invention is simple to use also in diving robots and other remote controlled equipment. It is also characteristic of the present apparatus that the pressure is essentially the same inside and outside the frame element, the hydraulic water pressure may thus be rather high without presenting any significant problem, and it is possible to use relatively simple and cheap solutions for design of the frame element.

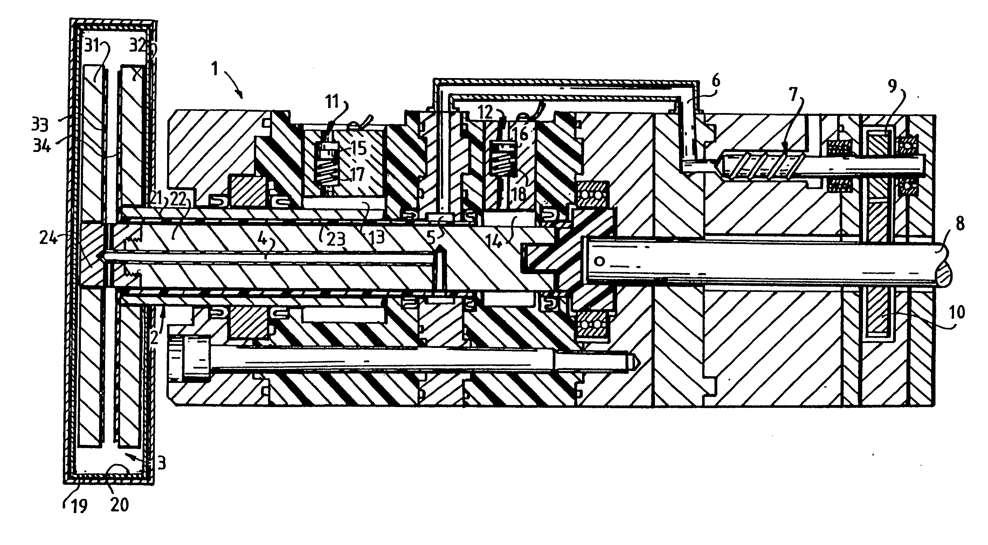

The present invention is further described hereinafter by way of example with respect to the accompanying drawing which is a sectional side elevation of one form of apparatus according to the invention, serving as a cutting tool.

In the Figure, index number 1 refers generally to the frame element consisting of several units joined together like a pack, by means of a bolt as shown in Figure, a rotating, two-piece electrically conductive shaft 2 has been mounted in bearings on this shaft. As is shown in Figure, in this example the shaft 2 of the apparatus based on the invention is formed of two shaft elements arranged within each other and one rotating shaft element 21 and 22. Shaft elements 21 and 22 have been electrically insulated from each other by arranging an electrically insulating intermediate element 23 between their opposite faces. The intermediate element 23 used in the shown example is an appropriate sleeve made of rubber or plastic-based material. Also the profiles of the opposite faces of the shaft elements 21 and 22 have been designed so as to prevent rotation of the shaft elements in relation to each other. Suitable profiles are any forms except round ones, for instance, the outer shaft element 21 is tubular shaft with central polygonal cave while the outer circumference of the inner shaft element 22 is formed to correspond the form of the outer tubular shaft 21. Alternative solution to prevent the shaft elements 21 and 22 from rotating in relation to each other is to lock them together with a wedge element, for instance.

For conduction of electricity to shaft 2, there are two chambers 13 and 14 in the frame element 1 containing liquid, electrically conductive medium, advantageously mercury. One of the chambers, in this example chamber 13, is designed to surround the outer circumference of the outer shaft element 21 while the other chamber, in this example chamber 14, is designed to surround the outer circumference of the inner shaft element 22 protruding from inside of the outer shaft element 21. Both chambers 13 and 14 are closed in this example with a cover made of electrically conductive material such as metal, and connected with electric wire with one of the poles of the power source, whereby electric current passes from the wire through the cover element to medium and from there further to the shaft. In the shown example the outer shaft element 21 is connected, through the medium contained in the surrounding chamber 13, to the "+" pole of the power source (not shown), and the inner shaft element 22, through the medium contained in the surrounding chamber 14, to the "−" pole of the power source. In addition, the chambers 13 and 14 are sealed against the surfaces of outer circumferences of the shaft elements 21 and 22 by means of suitable gaskets which will stand the mechanical wear caused by rotating shaft 2, these prevent leakage of medium; there is a same type of gasket between frame element and shaft 2 to prevent access of water into the frame element 1.

In order to prevent electric conductance from the chamber 13 and 14 to frame element 1 and the eventual damages, the chambers are lined with an electrically insulating layer or, as is the case in the example, the frame element walls surrounding the chambers 13 and 14, most advantageously the entire part of the frame element 1, where the chamber is situated, is made of non-conductive material, advantageously of rubber or plastic-based material.

In order to compensate the hydrostatic water pressure, which is an important aspect in underwater working, both chambers 13 and 14 are provided with pressure balancing devices 11 and 12. In the shown example the pressure balancing devices 11 and 12 consist each of cylinder 17, 18 and spring-loaded piston 15, 16 moving back and forth inside the cylinder according to the hydrostatic pressure of water. Cylinder 17, 18 consist of a cavity extending through the cover and widened out in the middle, its one end opens up to a space outside the frame element 1, and the other end to the chamber 13, 14 containing conducting medium, whereby the pressure is essentially the same outside frame part 1 and inside the chamber 13, 14. Thanks to this pressure compensation it is possible to reduce the strength and load of the chamber sealings, compared with the situation where no pressure balancing is available.

In the example shown the tip element 3 is formed of two electrically conductive flange-type elements 31 and 32 arranged concentrically apart from each other. The element 32 situated nearer the frame element 1 is attached to the outer shaft element 21 in a removable manner, and the element 31 likewise to the inner shaft element 22 in a removable manner. The apparatus made to serve as a cutting tool comprises also devices 4, 5, 6 and 7 the purpose of which is to feed cutting medium between the flange-type element 31 and 32 and the material to be cut. It should be pointed out in this connection that the flange-type elements 31 and 32 do not participate in the actual cutting procedure, they only serve as instruments in conductance of electricity to the piece to be cut and in formation of flame arc. The most advantageous cutting medium used is paste-type or powder-type thermal material burning in flame arc, such as graphite grease alloyed with aluminium powder, this will melt the material in the required point.

In the shown example the feeding devices for cutting medium comprise forced feeding device 7, such as screw pump, which is driven, through power transmission elements 9 and 10, by power shaft 8 of the power unit (not shown) which drives the shaft 2. Gear drive is used in this example, whereby one of the gears, gear 10, is arranged on shaft 8 and the other gear on the shaft of the screw pump 7. From the forced feeding device 7 one flow channel 6 for cutting medium is directed to the ring-type chamber space surrounding the inner shaft element 22. In order to direct cutting medium to the cutting point between the flange-type elements 31 and 32, second flow channel 4 for cutting medium was added to the feeding devices, it starts from chamber space 5 running centrally inside the inner shaft element 22 and ends in radial outlet channels which open in the space between the flange-type elements 31 and 32.

Containing aluminium grains the cutting medium is electrically conductive, that is why at least one of the flow channels, channel 4 as well as its radial outlet channels are coated with electrically insulating material in order to prevent conduction of electric current, through cutting medium, from shaft 2 to forced feeding device 7 or the power unit driving shaft 2. Current leakage has further been eliminated by means of an intermediate element made of electrically insulating material and mounted between shaft 2 and power shaft 8.

In order to create flame arc exactly in the required point, that is, close to the outer circumference of the flange-type elements 31 and 32, and not, for instance, between the flange-type elements 31 and 32, the opposite faces of the flange-type elements 31 and 32 are coated with a layer of electrically insulating material. Naturally, the flange-type elements can be assembled with other method as well, for instance so that finger-like electric wires built into non-conductive material are running inside the elements, leading from the conductive centre ring element to the conductive outer circumference.

In order to increase safety at work, the flange-type elements are enclosed inside the casing halves 19, 20 attached to the frame element and turning within each other like jaws as the apparatus is pressed against the work piece. The casing halves are most advantageously spring-loaded, whereby they are automatically pressed against each other as the apparatus is pulled off the work piece. Moreover the inner circumferences of the casing halves are designed to correspond essentially the circumference of the flange-type elements 31 and 32, and advantageously they are sealed against the flange-type elements, which prevents excessive inflow of surrounding water and unnecessary flow of cutting medium into the casing or out of the casing.

To minimize waste of cutting medium, and to direct it accurately to the piece to be cut there is an immovable nozzle device attached inside the casing surrounding the flange-type elements 31 and 32, this nozzle device directs the cutting medium coming out of radial outlet channels to the section in the circumference of the flange-type elements 31 and 32, which at a given time is towards the work piece. Thus flame arc is created only in one point between the flange-type elements 31 and 32. A suitable directing instrument would be a ring bush, for instance, which is immobile and surrounds the part of shaft 2 between the flange-type elements 31 and 32 and has in its wall one outlet for cutting medium. A tubular flow channel for cutting medium, for instance, runs from the ring bush to the circumference of the flange-type elements 31 and 32.

In accordance with an advantageous application of the invention, radial outflow channels of one flow channel, channel 4, are arranged in a removable end piece 24 attached to the end of shaft 2. Thus by changing tip element and end piece, which can be, as a whole, made of electrically conductive material, it is possible to alternate the apparatus based on the invention from a cutting tool into other applications, of which the most important would be: welding with a welding electrode rotating round its longitudinal axis, whereby earthing is arranged by means of a bush rotating against base material and surrounding the welding electrode; cleaning and coating of metal surface by using one of the flange-type elements attached to one of the shaft elements, cleaning agent or coating material is thereby fed through the flow channel in the inner shaft, most advantageously between the surface to be treated and the flange-type elements.

## Claims

1. An apparatus for underwater working such as heating, welding, torch cutting, cleaning and electrolytic coating of metal constructions, comprising an electrically conductive rotatable shaft (2) arranged on a frame element (1) for conducting electric current to a removable tip element (3) attached to the end of the shaft (2) for rotation therewith, said shaft (2) comprising an outer shaft element (21) and an inner shaft element (22) coaxial with said outer shaft and insulated electrically therefrom; two chambers (13, 14) formed in the frame element (1) and containing liquid electrically conductive medium, one of which chambers (13, 14) is connectible to the "+" pole of a power source and surrounds one of the inner and outer shafts (21, 22) and the other of which chambers (13, 14) is connected to the "−" pole of the power source and surrounds the other of the inner and outer shafts (21, 22), and each said chamber (13, 14) is closed by an electrically conductive cover means by way of which said electrically conductive medium is connectible to the power source; and wherein the tip element (3) is electrically conductive and comprises two parts, connected respectively to said inner and outer shafts; characterised in that the apparatus further comprises a respective pressure balancing device (11, 12) in each said cover means, each said pressure balancing device comprises a spring-loaded piston (15, 16) movable in a cavity (17, 18) one end of which opens to space outside the frame element (1) and the other end of which opens into the chamber (13, 14).

2. An apparatus in accordance with claim 1 wherein said inner and outer shafts (21, 22) are electrically insulated from one another by an insulating intermediate element (23), and wherein the inner surface of said outer shaft and the outer surface of said inner shaft are shaped complimentary to one another to prevent relative rotation of said shafts.

3. An apparatus in accordance with claim 1 or 2 wherein at least the respective wall of the frame element (1) bordering on each chamber (13, 14) is made of electrically non-conductive material.

4. An apparatus in accordance with any of the preceding claims in the form of a cutting tool wherein the tip element (3) comprises at least two coaxial, spaced apart flange-type elements (31, 32) of which one flange-type element (32) is attached to the outer element (21), and the other (31) is attached to the inner shaft element (22), and wherein the apparatus further comprises feeding devices (4, 5, 6, 7) the purpose of which is to feed cutting medium which burns in the flame arc created between the flange type elements, between the flange type elements (31, 32) and the material to be cut, whereby the material to be cut will melt.

5. An apparatus in accordance with claim 4 wherein the feeding devices for cutting medium comprise a forced feeding device (7); a first flow channel (6) for cutting medium extending from the forced feeding device (7) to a ring-type chamber (5) surrounding the inner shaft (22), and a second flow channel (4) for cutting medium which extends from the chamber (5) to the intermediare space between the flange-type elements (31, 32).

6. An apparatus in accordance with claim 5 wherein said forced feeding device (7) is a screw pump driven by way of power transmission devices (9, 10) from a power shaft of a power unit for driving the shaft (2), and wherein said second flow channel (4) extends coaxially within said inner shaft (22) to radial outlet channels opening into said intermediary space between the flange-type elements (31, 32).

7. An apparatus in accordance with claim 5 or 6 wherein at least one of the flow channels (4) and its outlet channels are electrically insulated from the inner shaft (22), and the opposite faces of the flange-type elements (31, 32) are provided with an electrically insulating layer (33, 34).

8. An apparatus in accordance with claim 7 wherein the outlet channels of the flow channel (4) for cutting medium have been formed in a removable end piece (24) attached to the end of the inner shaft (22).

9. An apparatus in accordance with any of the preceding claims wherein the flange-type elements (31, 32) are enclosed inside two casing halves (19, 20) turning like jaws within each other.

10. An apparatus in accordance with any of the preceding claims wherein an essentially immobile nozzle device is arranged between the flange-type elements (31, 32) the purpose of which is to direct cutting medium to the section in the circumference of the flange-type elements (31, 32) which at a given time face the piece to be cut.

**Patentansprüche**

1. Vorrichtung für Arbeiten unter Wasser wie Erwärmen, Schweißen, Schneidbrennen, Reinigen und elektrolytisches Beschichten von Metallkonstruktionen, mit einem elektrisch leitenden, an einem Gehäuseelement (1) angeordneten drehbaren Schaft (2) zum Leiten eines Stroms zu einem entfernbaren Spitzen-Element (3), das zwecks gemeinsamer Rotation am Schaft angebracht ist, wobei der Schaft (2) ein äußeres und koaxial dazu ein gegen letzteres elektrisch isoliertes inneres Schaftelement (21 bzw. 22) umfaßt, mit zwei in dem Gehäuseelement (1) ausgebildeten Kammern (13, 14), die mit einem elektrisch leitenden Medium gefüllt sind, von denen eine mit dem Pluspol einer Kraftquelle verbindbar ist und eines der Schaftelemente (21, 22) umgibt und die andere Kammer (14, 13) mit dem Minuspol verbindbar ist, und das andere der Schaftelemente (22, 21) umgibt, wobei jeder der Kammern (13, 14) durch elektrisch leitende Deckelmittel geschlossen ist, mittels derer das elektrisch leitende Medium mit der Kraftquelle verbindbar ist, und wobei das Spitzen-Element (3) elektrisch leitend ist und zwei Teile aufweist, die jeweils mit dem inneren und dem äußeren Schaft verbunden sind, dadurch gekennzeichnet, daß die Vorrichtung in jedem Deckelmittel mit Druckausgleichsmitteln (11, 12) ausgestattet ist, die jeweils einen federbelasteten Kolben (15, 16) aufweisen, die in einen Hohlraum bewegbar sind, dessen eines Ende ins Freie außerhalb des Gehäuseelements (1) und dessen anderes Ende in die Kammer mündet.

2. Vorrichtung nach Anspruch 1, wobei der innere und der äußere Schaft (21, 22) durch ein isolierendes Zwischenelement (23) voneinander isoliert sind und wobei die innere Oberfläche des äußeren Schaftes und die äußere Oberfläche des inneren Schaftes komplementär zueinander ausgebildet sind, um eine Relativdrehung der Schaftelemente zu verhindern.

3. Vorrichtung nach Anspruch 1 oder 2, wobei zumindest die entsprechende Wand des Gehäuseelements (1), die jede Kammer (13, 14) begrenzt, aus elektrisch nicht leitendem Material hergestellt ist.

4. Vorrichtung nach einem der vorangehenden Ansprüche in Form eines Schneidwerkzeugs, wobei das Spitzenelement (3) zumindest zwei kaoxial, voneinander beabstandete flanschähnliche Element (31, 32) aufweist, von denen ein flanschähnliches Element (32) mit dem äußeren Schaftelement (21) und das andere (31) mit dem inneren Schaftelement (22) verbunden ist, und wobei die Vorrichtung des weiteren Zuführmittel (4, 5, 6, 7) aufweist, deren Zweck es ist, ein Schneidmedium zuzuführen, das in dem Flammbogen brennt, der zwischen den flanschähnlichen Elementen (31, 32) und dem zu schneidenden Material erzeugt wird, wobei das zu schneidende Material schmilzt.

5. Vorrichtung nach Anspruch 4, wobei die Zuführungsvorrichtungen für das Schneidmedium eine angetriebene Zufuhreinrichtung (7), einen ersten, von der angetriebenen Zufuhreinrichtung (7) zu einer ringförmigen Kammer (5), die den inneren Schaft (42) umgibt, führenden ersten Strömungskanal (6) für das Schneidmedium und einen zweiten Strömungskanal (4) für ein Schneidmedium, das sich von der Kammer (5) zu dem Zwischenraum zwischen den flanschähnlichen Elementen (31, 32) erstreckt.

6. Vorrichtung nach Anspruch 5, wobei die angetriebene Zufuhreinrichtung (7) eine Schraubenpumpe ist, die über eine Kraftübertragungsvorrichtung (Getriebe) (9, 10) von einer Antriebswelle einer Antriebseinheit für den Antrieb des Schafts (2) angetrieben ist und der zweite Strömungskanal (4) sich koaxial in dem inneren Schaft (22) zu radial verlaufenden Auslaßkanälen hin erstreckt, die in den Zwischenraum zwischen den flanschähnlichen Elementen münden.

7. Vorrichtung nach Anspruch 5 oder 6, wobei zumindest einer der Strömungskanäle (4) und seine Auslaßkanäle vom Innenschaft (22) elektrisch isoliert ist und einander gegenüberliegende Flächen der flanschähnlichen Elemente (31, 32) mit einer elektrisch isolierenden Schicht (33, 34) ausgestattet sind.

8. Vorrichtung nach Anspruch 7, wobei die Auslaßkanäle des Strömungskanals (4) für das Schneidmedium in einem entfernbaren Endstück (24) ausgebildet sind, das an das Ende des inneren Schafts (22) angebracht ist.

9. Vorrichtung nach einem der vorangehenden Ansprüche, wobei die flanschähnlichen Elemente (31, 32) in zwei Gehäusehälften (19, 20) eingeschlossen sind, die sich wie Klauen ineinander drehen.

10. Vorrichtung nach einem der vorhergehenden Ansprüche, wobei eine im wesentlichen unbewegliche Düsenvorrichtung zwischen den flanschähnlichen Elementen (31, 32) ausgebildet ist, deren Zweck ist, das Schneidmedium dem Abschnitt im Umfang der flanschähnlichen Elemente (31, 32) zuzuführen, der zu einer gegebenen Zeit dem zu schneidenden Element zugewandt ist.

**Revendications**

1. Appareil permettant d'effectuer des travaux sous l'eau tels que des travaux de chauffage, de soudage, d'oxycoupage, de décapage et de revê-tement électrolytique de constructions métalli-ques, comprenant un arbre conducteur tournant (2) monté sur un élément formant carcasse (1) pour amener du courant électrique à un élément formant embout amovible (3) attaché à l'extrémité de l'arbre (2) de manière à tourner avec celui-ci, l'arbre (2) comprenant un élément d'arbre extérieur (21) et un élément d'arbre intérieur (22) coaxial à l'élément extérieur et isolé électriquement de celui-ci; deux chambres (13, 14) ménagées dans l'élément formant carcasse (1) et contenant un milieu liquide conducteur électrique, une des chambres (13, 14) pouvant être connectée au pôle "+" d'une source de courant et entourant un des éléments d'arbre intérieur et extérieur (21, 22) et l'autre des chambres (13, 14) étant connectée au pôle "−" de la source de courant et entourant l'autre des éléments d'arbre intérieur et extérieur (21, 22), chaque chambre (13, 14) étant fermée par une coiffe conductrice électrique par l'intermédiaire de laquelle le milieu conducteur électrique peut être connecté à la source de courant, et dans lequel l'élément formant embout (3) est conducteur électrique et comprend deux parties, reliées respectivement aux éléments d'arbre intérieur et extérieur, caractérisé en ce qu'il comprend, en outre, un dispositif équilibreur de pression (11, 12) dans chaque coiffe, chaque dispositif équilibreur de pression comprenant un piston à ressort (15, 16) mobile dans une cavité (17, 18) dont une extrémité communique avec l'espace situé à l'extérieur de l'élément formant carcasse (1) et dont l'autre extrémité s'ouvre dans la chambre (13, 14).

2. Appareil suivant la revendication 1, dans lequel les éléments d'arbre intérieur et extérieur (21, 22) sont isolés électriquement l'un de l'autre par un élément intermédiaire isolant (23) et dans lequel la surface intérieure de l'élément d'arbre extérieur et la surface extérieur de l'élément d'arbre intérieur de sont de configurations complémentaires en vue d'empêcher tout mouvement de rotation relatif des éléments d'arbre.

3. Appareil suivant la revendication 1 ou 2, dans lequel au moins la paroi de l'élément formant carcasse (1) qui borde chaque chambre (13, 14) est faite d'une matière non conductrice électrique.

4. Appareil suivant l'une quelconque des revendications précédentes, ayant la forme d'un outil de coupe dans lequel l'élément formant embout (3) comprend au moins deux éléments coaxiaux de type flasque espacés (31, 32) dont l'un, l'élément (32), est attaché à l'élément d'arbre extérieur (21) et l'autre, l'élément (31), est attaché à l'élément d'arbre intérieur (22), et dans lequel l'appareil comprend, en outre, des moyens d'alimentation (4, 5, 6, 7) destinés à amener entre les éléments de type flasque (31, 32) et la matière à couper, un agent de coupe qui brûle dans l'arc à flamme créé entre ces éléments de type flasque, de sorte que la matière à couper fond.

5. Appareil suivant la revendication 4, dans lequel les moyens d'alimentation pour l'agent de coupe comprennent un dispositif d'alimentation forcée (7), un premier canal d'écoulement (6) pour l'agent de coupe qui va du dispositif d'alimentation forcée (7) jusqu'à une chambre annulaire (5) entourant l'élément d'arbre intérieur (22), et un second canal d'écoulement (4) pour l'agent de coupe qui va de la chambre (5) jusqu'à l'espace séparant les éléments du type flasque (31, 32).

6. Appareil suivant la revendication 5, dans lequel le dispositif d'alimentation forcée (7) est une pompe à vis entraînée par l'intermédiaire de moyens de transmission (9, 10) à partir d'un arbre de prise de force d'une unité motrice destinée à entraîner l'arbre (2), et dans lequel le second canal d'écoulement (4) s'étend coaxialement dans l'élément d'arbre intérieur (22) vers des canaux de sortie radiaux qui s'ouvrent dans l'espace séparant les éléments de type flasque (31, 32).

7. Appareil suivant la revendication 5 ou 6, dans lequel au moins un des canaux d'écoulement (4) et ses canaux de sortie sont isolés électriquement de l'élément d'arbre intérieur (22) et les faces opposées des éléments de type flasque (31, 32) sont pourvues d'une couche isolante électrique (33, 34).

8. Appareil suivant la revendication 7, dans lequel les canaux de sortie du canal d'écoulement (4) pour l'agent de coupe ont été ménagés dans une pièce d'extrémité amovible (24) attachée à l'extrémité de l'élément d'arbre intérieur (22).

9. Appareil suivant l'une quelconque des revendications précédentes, dans lequel les éléments de type flasque (31, 32) sont enfermés dans deux moitiés de boîtier (19, 20) qui tournent l'une dans l'autre, comme des mâchoires.

10. Appareil suivant l'une quelconque des revendications précédentes, dans lequel un dispositif à buse essentiellement immobile est prévu entre les éléments de type flasque (31, 32) et est destiné à diriger l'agent de coupe vers la section de la circonférence des éléments de type flasque (31, 32) qui, à un moment donné, fait face à la pièce à couper.